# EUROPÄISCHE PATENTSCHRIFT

(11) **EP 0 828 801 B1**
(45) Veröffentlichungstag und Bekanntmachung des Hinweises auf die Patenterteilung: **27.10.2004**
(21) Anmeldenummer: 96919795.3
(22) Anmeldetag: 22.05.1996
(51) Int. Cl.: C09J 5/00, C09J 167/02, C09J 175/04, C08G 18/66

(54) **KLEBEVERFAHREN**
BONDING PROCESS
PROCEDE DE COLLAGE

(30) Priorität: 26.05.1995 DE 19519391; 27.12.1995 DE 19548842
(43) Veröffentlichungstag der Anmeldung: 18.03.1998
(73) Patentinhaber: Henkel Kommanditgesellschaft auf Aktien, 40589 Düsseldorf-Holthausen (DE)
(72) Erfinder: FERENCZ, Andreas, D-40223 Düsseldorf (DE); HÜBNER, Norbert, D-40597 Düsseldorf (DE); FISCHER, Herbert, D-40229 Düsseldorf (DE); UNGER, Lothar, D-42781 Haan (DE); PETERS, Bernd, D-42657 Solingen (DE); MÜLLER, Wolf-Rüdiger, D-40724 Hilden (DE); DONOTHEK, Horst, D-40789 Monheim (DE); KUHN, Jörg, D-41065 Mönchengladbach (DE)
(86) Internationale Anmeldenummer: PCT/EP1996/002194
(87) Internationale Veröffentlichungsnummer: WO 1996/037566

(56) Entgegenhaltungen:
- EP-A- 0 405 329
- EP-A- 0 421 154
- WO-A-84/02144
- GB-A- 2 135 684
- US-A- 4 131 714

## Beschreibung

Die Erfindung betrifft ein Verfahren zum Verkleben von Substraten mit einem wasserfreien bzw. wasserarmen teilkristallinen, bei Raumtemperatur festen Klebstoff sowie den Klebstoff und seine Herstellung.

Verfahren zum Verkleben von Substraten mit bei Raumtemperatur festen Klebstoffen ist bekannt. So werden die bei Raumtemperatur festen Schmelzklebstoffe zunächst erwärmt, bis sie klebrig werden, und dann als Schmelze auf die zu verklebenden Substrate aufgetragen. Nach dem Zusammenfügen binden sie beim Abkühlen unter Verfestigung physikalisch durch Kristallisation oder Viskositätsanstieg ab. Rohstoffe für derartige Schmelzklebstoffe sind z.B. Polyethylenvinylacetat, Polyamid, Polyester und Polyurethan. Ein derartige PU-Schmelzklebstoff wird in der WO 9413726 beschrieben. Darin wird ein wasserlösliches hochmolekulares nichtionisches teilkristallines Polyurethan als Basis für einen Schmelzklebstoff beansprucht. Das Polyurethan ist durch folgende Struktureinheiten gekennzeichnet:
a) - O(-CH₂-CH₂-O)ₙ-,
   wobei n = 8 bis 500, insbesondere 20 bis 300 ist
b) - CO-NH-X-NH-CO-,
   wobei X ein aliphatischer oder cycloaliphatischer Rest, insbesondere ein Rest von m-Tetramethylxyloldiisocyanat (TMXDI) ist, und
c) -O-Y-O-,
   wobei Y ein hydrophober Rest ist, insbesondere entweder

   (-CH₂-CH(CH₃)-O)ₘ-CH₂-CH(CH₃)-,

   (-CH₂-CH(C₂H₅)-O)ₘ-CH₂-CH(C₂H₅)-

   und

   (-CH₂-CH₂-CH₂-CH₂-O)ₘ-CH₂-CH₂-CH₂-CH₂-

   mit m = 8 bis 500, insbesondere 20 bis 300, oder aber Alkylen- oder Cycloalkylen-Gruppen mit 2 bis 44 C-Atomen, insbesondere 6 bis 36 C-Atomen,
   wobei c) von 0 bis 40, insbesondere 2 bis 30, vorzugsweise 5 bis 25 Gew.-%, bezogen auf a) + c) im Polyurethan ausmacht.

Schmelzklebstoffe haben den generellen Nachteil, daß zum Aufschmelzen eine wärmeerzeugende Vorrichtung benötigt wird.

Es sind auch bei Raumtemperatur feste Klebstoffe bekannt, die ohne Aufschmelzen zum Verkleben geeignet sind, z.B. Klebestifte. Um damit zu verkleben, streicht man mit dem Klebestift einfach über das zu verklebende Substrat und fügt es dann mit dem anderen Substrat zusammen. Der bereits bei Raumtemperatur klebrige Klebstoff bindet ab, indem das Lösungsmittel bzw. das Wasser verdunstet oder in das Substrat diffundiert.

Ein derartiger Klebestift wird in der EP 405 329 beschrieben. Der formstabile und weichabreibbare Klebestift besteht aus einer wäßrigen Zubereitung eines Polyurethans als Bindemittel und einem Seifengel als formgebender Gerüstsubstanz sowie gewünschtenfalls Hilfsstoffen. Das Polyurethan ist ein Reaktionsprodukt eines Polyols oder Polyolmischung, einer 2- oder mehrfunktionellen Isocyanatkomponente, einer in alkalischer wäßriger Lösung zur Salzbildung befähigten Komponente und/oder eines nichtionischen hydrophilen Modifizierungsmittels und gewünschtenfalls eines Kettenverlängerungsmittels. In Beispiel 1 d wurde ein Polyurethan hergestellt aus: 29,7 Gew.-Teilen Isophorondiisocyanat, 100 Gew.-Teilen Polyethylenpropylenglykol mit einem EO-Anteil von 10 % und einem Molekulargewicht von 2 000, 6,8 Gew.-Teilen Dimethylolpropionsäure und 2,2 Gew.-Teilen NaOH. Im Aceton-Verfahren wurde eine wäßrige Dispersion mit einem Festkörpergehalt von 36 Gew.-% hergestellt. Aus 82 Gew.-Teilen dieser PU-Dispersion und 2 Gew.-Teilen Wasser, 7 Gew.-Teilen Glycerin, 3 Gew.-Teilen PPG 600 sowie jeweils 3 Gew.-Teilen Natriumpalmitat und Natriumstearat wurde schließlich der Klebstoff hergestellt. Er hatte bei 60 °C eine Schmelzviskosität von 2,4 Pas. Ein derartiger Klebestift hat den Nachteil, eine dichte Verpackung zu benötigen. Anderenfalls besteht die Gefahr, daß er austrocknet und damit sein Eigenschaftsprofil verschlechtert wird. Außerdem wellt sich Papier aufgrund des hohen Wassergehaltes.

Diese Nachteile werden bei einem Klebestift vermieden, der aus einer festen Klebekomponente und mikroverkapseltem Lösungsmittel besteht (siehe GB 995 524). Von Nachteil ist hierbei jedoch, daß nach der Benutzung an der Oberfläche eine Haut entsteht, die vor erneuter Benutzung mühsam entfernt werden muß.

Die Nachteile eines wasserbasierten Klebestiftes werden auch durch den Klebestift auf Basis von Wachs, Polypropylen und Kolophonium vermieden (siehe DE 20 22 464). Der Stift wird durch Reibungswärme aktiviert, wobei die oberste Klebstoffschicht aufschmilzt. Beim Abkühlen bindet der Stift fast momentan ab, weshalb eine Korrektur nicht mehr möglich ist. Außerdem wird seine Handhabung durch Ziehen von Fäden erschwert. Schließlich ist Kolophonium kennzeichnungspflichtig.

Ausgehend von diesem Stand der Technik ergibt sich als Aufgabe, ein Klebeverfahren sowie einen dazugehörigen geeigneten Klebstoff zur Verfügung zu stellen, der diese Nachteile nicht hat und sich leicht handhaben läßt. Dazu gehört insbesondere eine geringe oder gar keine Verpackung, Applikation mit leichtem Druck, eine nicht kennzeichnungspflichtige Zusammensetzung und eine einfache Lösung der Bindung bei Bedarf. Der Klebstoff sollte insbesondere für Papier und Pappe geeignet sein.

Die erfindungsgemäße Lösung ist den Patentansprüchen zu entnehmen. Sie besteht insbesondere in einem Verfahren zum Verkleben von Substraten mit einem bei Raumtemperatur festen Klebstoff, welches dadurch gekennzeichnet ist, daß man den Klebstoff durch innere und/oder äußere Reibung aktiviert, die Substrate mit dem nun klebrigen Klebstoff dazwischen zusammenfügt und dann das Gefüge durch Ruhen lassen innerhalb von 30 Sekunden bis 30 Minuten abbindet.

Zur inneren Reibung werden Volumenelemente des Klebstoffes relativ zueinander bewegt, z.B. durch Walken zwischen den Fingern. Dabei wird der Klebstoff klebrig und kann wie ein Klebepad verwendet werden. Vorzugsweise wird der Klebstoff jedoch durch äußere Reibung aktiviert, wobei er und das Substrat aufeinander gerieben werden. Die Reibung sollte so groß sein, daß bei der Haftreibung eine Filmdicke von 2 bis 200 µm, insbesondere von 10 bis 100 µm bei einmaligem Überstreichen des Substrates mit dem Klebstoff in einer Geschwindigkeit von 1 bis 500 cm/sec, bevorzugt 2 bis 100 cm/sec, bei einem Druck von 1 kPa bis 10 MPa, bevorzugt 5 kPa bis 5 MPa, vorzugsweise 10 kPa bis 1,0 MPa, erzielt wird. Diese Werte gelten für Normalbedingungen (20 °C und 50 % relativer Luftfeuchtigkeit) sowie für ein Papier folgender Qualität: 5015 Spezial Copier der Fa. Soennecken.

Der erfindungsgemäße Klebstoff ist bei Raumtemperatur (20 °C) fest und teilkristallin. Sein Wassergehalt beträgt 0-15 Gew-%, gemessen nach Karl Fischer. Er ist gekennzeichnet a) durch einen Kristallisationsgrad, ermittelt durch DSC im Bereich von -40 °C bis +120 °C, dem eine Schmelzenthalpie von 10 bis 150 mJ/mg, bevorzugt 15 bis 80 mJ/mg, besonders bevorzugt 20 bis 70 mJ/mg entspricht, b) durch mindestens eine Kristallisationstemperatur, ermittelt durd DSC, mit einem Extremum des Schmelzpeaks bei 20 bis 110 °C, insbesondere bei 30 bis 80 °C sowie c) durch eine Kristallisationsgeschwindigkeit von 30 sec bis 30 min, wobei der Klebstoff aus 25-100 Gew-% Bindemittel und 0-75 Gew.-% Zusätzen besteht und das Bindemittel aus a, mindestens einen teilbristallinen und b, mindestens einen amorphen und/order flüssigen Polyester, Polyesteramid oder Polyesterurethan mit Molekulargewichten MG_{w} von 1000 bis 20 000 besteht.
Die Schmelzenthalpie wird bestimmt durch DSC.
Die Kristallisationstemperatur wird bestimmt durch DSC, und zwar als Temperatur bei der der Schmelzpeak sein Extremum durchläuft.
Die Kristallisationsgeschwindigkeit wird bestimmt durch Beobachtung einer klebrigen Schicht im Polarisationsmikroskop.

Aufgrund der Bedeutung dieser Parameter für die Verklebung wird folgende Arbeitshypothese angenommen: Die kristallinen Bereiche werden durch die mechanische Einwirkung der Reibung in eine amorphe Form überführt. Diese amorphe Form erzeugt die Klebrigkeit. Solange der Klebstoff nicht rekristallisiert, bleibt er haftklebrig. Nach der Rekristallisation verliert der Klebstoff seine Klebrigkeit und gewinnt seine endgültige Festigkeit.

Der erfindungsgemäße Klebstoff besteht aus 25 bis 100, insbesondere 30 bis 99 und vorzugsweise aus 60 bis 98 Gew.-%, mindestens eines Bindemittels und aus 0 bis 75, insbesondere aus 0,1 bis 70 und vorzugsweise aus 0,5 bis 40 Gew.-% an Zusätzen. Das Bindemittel ist gleichzeitig die formgebende Substanz. Die Zusätze dienen in erster Linie dazu, die Kristallisation, die Klebrigkeit und das Abriebverhalten zu beeinflussen. Darüber hinaus können sie aber auch die üblichen Funktionen erfüllen, nämlich stabilisieren, konservieren, färben usw..

In einer bevorzugten Ausführungsform besteht das Bindemittel im allgemeinen aus A) mindestens einer teilkristallinen und B) mindestens einer amorphen und/oder flüssigen Polyester-Komponente. Beide Bindemittel-Komponenten A) und B) sind in Wasser nicht löslich, d.h. es lösen sich weniger als 10 g, insbesondere weniger als 1 g in 100 ml Wasser bei 20 °C. Ihr durchschnittliches Molekulargewicht MG_{w} beträgt 1000 bis 25000, insbesondere 2000 bis 15000. Bei geeigneter Kristallinität kann die A-Komponente 100 % ausmachen. Entscheidend ist das Mengenverhältnis von kristall,-inem : amorphem Anteil. Im allgemeinen sollte der teilkristalline Polyester vorzugsweise einen Anteil von 5 bis 95 Gew.-%, insbesondere 15 bis 60 und vorzugsweise 20 bis 40 Gew.-% haben.

Die Komponenten A und B dürfen miteinander nur begrenzt verträglich sein, so daß morphologisch ein Gemenge aus kristallinen und amorphen Bereichen erkennbar ist (erkennbar durch Beobachtung mit Polarisationsmikroskop, DSC, Röntgenuntersuchung).

Trotzdem liegt makroskopisch eine scheinbar homogene Verteilung vor, die sich nicht im Laufe der Zeit verändern darf, auch bei erhöhten Lagertemperaturen dürfen keine Separationserscheinungen auftreten. Um eine Verträglichkeit zu erreichen, kann auch ein Verträglichkeitsvermittler eingesetzt werden, z.B. spezielle Polyesterweichmacher bzw. spezielle Blockpolymere. Vorzugsweise wird die Verträglichkeit jedoch dadurch stabilisiert, daß die Komponenten A und B chemisch miteinander verbunden werden, z.B. durch nachträgliche chemische Verknüpfung von aktiven Gruppen mit Polyisocyanaten.

Unter Polyester sind Polymere mit überwiegend Estergruppen in der Hauptkette zu verstehen. Aber auch Polymere mit überwiegend Estergruppen in den kammartigen Seitenketten sollen darunter fallen, z.B. Polyacrylate, bei denen die Alkoholkomponente 1 bis 18 C-Atome, vorzugsweise 1 bis 8 C-Atome enthält. Bei den übrigen Gruppen kann es sich um Amid-Gruppen handeln (Polyester-Amide) oder um Urethan-Gruppen (Polyester-Urethane).

Vorzugsweise werden reine Polyester eingesetzt, und zwar mit den Estergruppen in der Hauptkette.

Zur PES-Herstellung sind grundsätzlich alle Monomere verwendbar, die polymerisiert Esterbindungen in der Hauptkette bilden (incl. Polycarbonate). Neben Kohlenstoffatomen können sie auch Heteroatome tragen (S, N, Halogene, P). Neben Säure- und Alkoholfunktionen können noch weitere funktionelle Gruppen vorhanden sein. Insbesondere sind alle Monomere brauchbar, die schon für PES- oder die PES-Komponente in PUR-Schmelzklebern eingesetzt werden. Die Endgruppen der Polyester können durch Nachreaktion umgewandelt sein, z.B. durch Ver- und Umesterung. Vorzugsweise sind die Engruppen OH-, -COOH- oder Urethan-Gruppen. Die Bausteine für die Polyester sind Dicarbonsäuren, Hydroxycarbonsäuren und Diole.

Die Dicarbonsäure-Bausteine können in einer beliebigen reaktiven Form eingesetzt werden, z.B. als freie Säure, Säurechlorid, Ester (speziell Methylester) etc. Brauchbar sind: Aliphatische Polycarbonsäuren, speziell Dicarbonsäuren 1 bis 36 Atomen, ebenso ungesättigte und aromatische Dicarbonsäuren sowie Dicarbonsäuren mit den Hetero-Atomen S, N und Halogene (Bromterephthalsäure, Fluorterephthalsäure). Konkret seien genannt: Oxalsäure, Malonsäure, Sebacinsäure, Azelainsäure, Decandicarbonsäure, Dodecandicarbonsäure, Dimethyl-1,4-cyclohexandicarbonsäureester, p-Phenylendiessigsäure, 2,5-Dimethylterephthalsäure, Methylterephthalsäure, 2,6-Naphthyldicarbonsäure, 4,4'-Isopropyldibenzoesäure, 1,2-Ethylendioxy-4,4'-dibenzoesäure, 4,4'-Dibenzoesäure (Diphensäure), Sulfonyl-4,4'-dibenzoesäure. Besonders zweckmäßig sind: Bernsteinsäure, Glutarsäure, Adipinsäure, Isophthalsäure, Terephthalsäure, Phthalsäure sowie Makromonomere (Präpolymere) mit über 36 C-Atomen.

Hydroxycarbonsäure-Bausteine können ebenfalls in einer beliebigen reaktiven Form eingesetzt werden, z.B. als freie Säure, Säurechlorid, Ester (speziell Methylester) etc.. Brauchbar sind aliphatische Hydroxylcarbonsäuren mit mehreren, vorzugsweise jedoch mit je einer Hydroxy- und Carbonsäuregruppe und mit 2 bis 36 Atomen. Gleiches gilt für ungesättigte und aromatische, sowie für Hydroxycarbonsäuren mit Hetero-Atomen wie S, N und Halogene. Konkret seien genannt: 4-Hydroxybenzoesäure, Pivalolactone, [-Caprolactone, 6-Hydroxy-2-naphthoesäure, Milchsäure und Glykolsäure.

Auch die Polyol-Bausteine können in einer beliebigen reaktiven Form eingesetzt werden, z.B. als freier Alkohol, Ester (speziell Essigsäureester) etc. Brauchbar sind aliphatische Polyole, speziell Diole mit 1 bis 36 Atomen. Gleiches gilt für ungesättigte und aromatische sowie für Polyole mit den Hetero-Atomen S, N und Halogene. Konkret seien genannt: 1,2-Propandiol, 1,3-Propandiol, 1,4-Butandiol, 1,4-Cyclohexandimethanol, 2,2-Dimethyl-1,3-propantriol, Decandiol, 4,4'-Dihydroxy-1,1'biphenyl, Di-p-Hydroxyphenylpropan, 1,4-Hydrochinon. Bicyclo-[2.2.2]-octandimethylenglykol, Methyl-pphenylenglykol 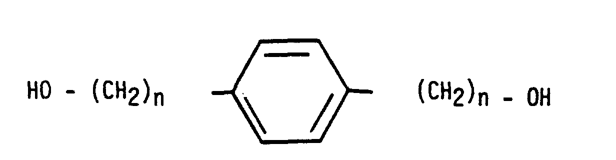 mit n = 1 bis 30 (auch in m-Stellung).
Bevorzugt sind: 1,4-Pentandiol, Ethylenglykol, 1,6-Hexandiol, 2,3-Butandiol, Neopentylglykol, 2-Methyl-1,4-Butandiol sowie Makromonomere (Prepolymere) mit über 36 Atomen wie z.B. Polyethylenglykol oder Poly(tetrahydrofuran)diol.

Weitere konkrete Monomere sowie die Zusammenhänge zwischen Monomeren und Kristallinität sind dem Fachmann bekannt (s. z.B. Encyclopedia of Polymer Science and Technology, Stichwort "Polyester", Seiten 62 bis 128).

Polyesteramide sind Copolymerisate mit Amid- und Estergruppen in der Hauptkette. Ein statistisches Copolymerisat wird durch gemeinsames Kondensieren der Monomere hergestellt. Monomere können sein: Disäuren, Diamine, Diole, Aminosäuren, Hydroxysäuren entsprechend der Aufzählung für Polyester, außer den Endgruppen. Sie können in jeder reaktiven Form eingesetzt werden. Block-Copolymere können aus verschiedenen Polyesterblöcken durch Verknüpfung z.B. von Carbonsäure-terminierten Polyestern mit Diisocyanaten (bzw. NCOterminierten Präpolymeren) erhalten werden. Auch können (Di)-carbonsäuren mit Bisoxazolinen oder Oxazolidin-2-onen umgesetzt werden. Block-Copolymere können auch aus Polyamiden und Polyestern mit Hilfe von Isocyanaten oder durch Umesterung bzw. Umamidierung erhalten werden. Die Bausteine für die Polyester und die Polyamide wurden bereits bei den Polyestern genannt. Es handelt sich um die entsprechenden Verbindungen mit Amino- anstelle von Hydroxyl-Gruppen. Bevorzugte Bausteine sind wiederum Di-Amine und Di-Säuren bzw. amino- und säurefunktionalisierte Monomere wie Lactam.

Bei einer weiteren bevorzugten Ausführungsform ist das Bindemittel ein Polyurethan, welches aus folgenden Komponenten herstellbar ist:
a) mindestens ein aliphatisches oder aromatisches Diisocyanat, insbesondere MDI, TDI, HDI, IPDI und vor allem TMXDI,
b) mindestens ein kristallisierendes Diol, insbesondere aus folgender Gruppe
   - Polyethylenglykol mit einem Molekulargewicht (Zahlenmittel) von 200 bis 40 000, insbesondere 1 500 bis 15 000 und vorzugsweise 4 000 bis 8 000,
   - Polytetrahydrofuran mit einem Molekulargewicht von 200 bis 4 000, insbesondere von 1 000 bis 3 000,
   - Copolymer aus Ethylenoxid und Propylenoxid mit einem Molekulargewicht von 200 bis 40 000, vorzugsweise von 400 bis 10 000, wobei das Copolymere zweckmäßigerweise ein Blockcopolymer vom Typ PEG/PPG/PEG mit einem PEG-Anteil von 10 bis 80 % darstellt sowie gegebenenfalls
   - Polyesterdiol, insbesondere ein Polycaprolactondiol mit einem Molekulargewicht von 200 bis 50 000, insbesondere 200 bis 5 000,
c) gegebenenfalls mindestens ein Diol, welches zur Ionenbildung befähigt ist, insbesondere zur Bildung von Carboxylat-, Sulfat- oder Ammoniumionen und
d) gegebenenfalls mindestens ein 3- oder höherfunktionelles Polyol wie Glycerin und TMP und
e) gegebenenfalls mindestens ein hydrophobes Diol, insbesondere aus der Gruppe:
   - Polypropylenglykol mit einem Molekulargewicht von 200 bis 4 000, insbesondere von 500 bis 2 000 und
   - Alkandiol mit 1 bis 100, insbesondere von 2 bis 50, besonders bevorzugt 5 bis 30 C-Atomen,
wobei das Verhältnis der Isocyanatgruppen zu den Hydroxylgruppen von 0,5 bis 1,2 : 1, insbesondere von 0,7 bis 1 : 1 variieren kann.

Die Polyurethane können sowohl in einem einstufigen als auch in einem zweistufigen Verfahren hergestellt werden. In dem zweistufigen Verfahren wird zunächst ein Prepolymeres hergestellt, indem ein Teil der Polyole, z.B. die hydrophilen, mit dem Diisocyanat vorreagieren. Dann wird das nächste Polyol zugesetzt.

Vorzugsweise wird das erfindungsgemäße Polyurethan jedoch in einem einstufigen Verfahren hergestellt. Dabei werden zunächst alle Ausgangsstoffe in Gegenwart eines organischen Lösungsmittels bei einem Wassergehalt von weniger als 0,5 Gew.-% gemischt. Die Mischung wird auf 70 bis 200 °C, insbesondere auf 80 bis 170 °C und vorzugsweise auf 130 bis 170 °C ca. 1 bis 30, insbesondere 1 bis 5 Stunden erhitzt. Die Reaktionszeit kann durch Anwesenheit von Katalysatoren verkürzt werden. Insbesondere sind tertiäre Amine brauchbar, z.B. Triethylamin, Dimethylbenzylamin, Bis-Dimethylaminoethylether und Bis-Methylaminomethylphenol. Besonders geeignet sind 1-Methylimidazol, 2-Methyl-1-vinylimidazol, 1-Allylimidazol, 1-Phenylimidazol, 1,2,4,5-Tetramethylimidazol, 1(3-Aminopropyl)imidazol, Pyrimidazol, 4-Dimethylamino-pyridin, 4-Pyrrolidinopyridin, 4-Morpholinopyridin, 4-Methylpyridin. Vorzugweise wird jedoch ohne Katalysator gearbeitet. Auch das Lösungsmittel wird zweckmäßigerweise weggelassen. Darunter werden inerte organische flüssige Stoffe mit einem Siedepunkt unter 200 °C bei Normaldruck verstanden, insbesondere Aceton.

Die Polyester-Urethane werden auf bekanntem Wege aus Polyester-Polyolen und Polyisocyanaten hergestellt, insbesondere aus Polyester-Diolen und Diisocyanaten. Die Polyester-Polyole wurden bereits oben beschrieben. Sie können sowohl mit aliphatischen als auch mit aromatischen Isocyanaten umgesetzt werden. Bevorzugte Diisocyanate sind: NDI, HDI, CHDI, IPDI, TMDI, m-TMXDI, p-TMXDI, H₁₂-MDI, PPDI, 2,4-TDI, 80:20-TDI, 65:35-TDI, 4,4'-MDI, Polymer-MDI und n-TMI. Weitere brauchbare Isocyanate sind: DDI 1410, TDI, MDI, 2,4'-MDI; Desmodur R, Desmodur RI, IEM und m-Phenylen-diisocyanat.

Diese und weitere Polyisocyanate sind dem Fachmann bekannt (siehe Encyclopedia of Polymer Science and Technology, Stichwort "Polyurethane", S. 244 bis 248). Die Polyester-Urethane haben vorzugsweise OH-, COOH-, Ester- und Urethan-Endgruppen.

Endgruppen-modifizierte Polyesterurethane (Polyetherurethane) werden so hergestellt, daß zunächst Polyesterurethane (Polyetherurethane) mit NCO-Endgruppen hergestellt werden. Anschließend werden die freien NCO-Endgruppen mit aus der Urethanchemie bekannten, vorzugsweise monoreaktiven Verbindungen umgesetzt. So können zum Beispiel über Fettalkohole Alkylendgruppen mit 4 bis 22 C-Atomen eingefügt werden. Außerdem seien Umsetzungen mit aromatischen Alkoholen und Polyestern mit einer OH- oder COOH-Gruppe genannt.

Insbesondere wird eine Ausführungsform des erfindungsgemäßen Klebstoffes bevorzugt, bei der man zunächst ein NCO-terminiertes Prepolymer auf Basis eines aromatischen oder cycloaliphatischen Isocyanates und eines Polyglykols herstellt und dann die bei dieser unterstöchiometrischen Umsetzung nicht abreagierten NCO-Gruppen mit aliphatischen Alkoholen mit 4 bis 22 C-Atomen, mit aromatischen Alkoholen oder mit OH- bzw. COOH-terminierten Polyestern absättigt, so daß Reaktionsprodukte entstehen, die frei von reaktiven Gruppen sind.

Es können auch Mischungen von Polyester und Polyurethan als Bindemittel eingesetzt werden, wobei das Polyurethan ein Polyester- oder ein Polyetherurethan sein kann. Auch Mischungen von Polyester- und Polyetherurethan sind möglich.
Neben dem Bindemittel kann der Klebstoff noch folgende Zusätze enthalten:
a) 0 bis 50, insbesondere 0 bis 20 Gew.-% mindestens eines kristallinitätsmodifizierenden Zusatzes, insbesondere aus folgender Gruppe: Salze von aromatischen und aliphatischen Carbonsäuren (z.B. Ca-Stearat), Wachs, Polyacrylat, Polyethylen, Polyvinylacetat, Polyamid, Polyurethan und Polyvinylchlorid sowie Polyester bzw. Polyurethan, wenn das Bindemittel ein Polyurethan bzw. ein Polyester ist,
b) 0 bis 20, insbesondere 0 bis 10 und vorzugsweise 0,1 bis 5 Gew.-% mindestens eines feinteiligen, wasserunlöslichen Pigments oder Füllstoffes, insbesondere aus der Gruppe: Alkali-Stearat, Graphit, Talkum, TiO₂, hochdisperse Kieselsäure (Aerosil), Bentonit, Wollastonit, Kreide, Magnesiumoxid und Glasfasern,
c) 0 bis 30, insbesondere 0 bis 10 Gew.-% mindestens eines nichtflüchtigen Weichmachers, vor allem aus der Gruppe der Phthalate, Sebacate, Phosphate, z.B.: Diphenyl-, Benzylbutylphthalat, Trioctylphosphat und n-Ethyl-o,p-Toluolsulfonamid.
d) 0 bis 5, insbesondere 0 bis 2 Gew.-% mindestens eines der folgenden Zusatzstoffe: Antioxidantien, Konservierungsstoffe und Farbstoffe,
e) Wasser und
f) 0 bis 30, insbesondere 0 bis 10 Gew.-% mindestens eines Tackifiers, vor allem aus der Gruppe: Terpen-Phenol-Harz, Kolophonium-Glycerin-Ester, Polycyclopentadien-Harz, Kohlenwasserstoffharz und Methylstyrol/Styrol-Copolymer.

Die Zusätze variieren natürlich in Art und Menge in Abhängigkeit von dem Bindemittel. Die obigen Angaben gelten vor allem für Polyester. Für Polyurethane, insbesondere Polyether-Urethane werden als kristallinitätsmodifizierende Zusätze zweckmäßigerweise 0 bis 50, insbesondere 10 bis 40 Gew.-% eines PEG, PPG, PTHF und/oder eines Polyesters eingesetzt. Als nichtflüchtige Weichmacher werden empfohlen: 0 bis 50, insbesondere 0 bis 30 Gew.-% und vor allem 0 bis 10 Gew.-% mindestens eines wassermischbaren, hydrophilen Weichmachers aus der Gruppe : Glycerin, Ethylenglykol und Diglyme.

Der Wassergehalt in dem Klebstoff liegt im Bereich von 0 bis 15 Gew.-%, insbesondere deutlich unter 5 Gew.-%, gemessen nach Karl Fischer.
Die angegebenen Gewichtsprozente beziehen sich auf den Klebstoff insgesamt.

Die Weichmacher haben alle einen Siedepunkt von mehr als 150 °C bei Normaldruck. Der Klebstoff ist daher praktisch frei von leichtflüchtigen Lösungsmitteln.

Das Bindemittel sowie die Zusätze werden in der Schmelze gemischt, vorzugsweise solange bis keine Homogenitätsunterschiede mit dem Auge feststellbar sind.

Die so erhaltene Klebstoffmasse kann in jede gewünschte Form gebracht werden, z.B. Blättchen, Folien oder Stifte. Bevorzugt sind die Klebestifte, sei es mit einem kreisförmigen, ellipsenförmigen oder eckigen Querschnitt.

In gebrauchsfertiger Form enthält der Klebstoff keine reaktiven Gruppen mehr. Er enthält schließlich weniger als 10 Gew.-%, vorzugsweise weniger als 5 Gew.-% an flüchtigen organischen Bestandteilen mit einer Siedetemperatur von unter 150 °C.

Der erfindungsgemäße Klebstoff eignet sich vor allem zum Verkleben von Substraten, wobei man den Klebstoff durch innere und/oder äußere Reibung aktiviert, die Substrate mit dem dann klebrigen Klebstoff dazwischen zusammenfügt und schließlich das Gefüge durch Ruhenlassen innerhalb von 30 Sekunden bis 30 Minuten abbindet.

Bei der Gleitreibung auf einem Papier wird zweckmäßigerweise eine Filmdicke von 2 bis 200 µm, bevorzugt 10 bis 100 µm, bei einer Geschwindigkeit von 1 bis 500 cm/sec, bevorzugt 2 bis 100 cm/sec und bei einem Druck von 1,0 kPa bis 10 MPa, bevorzugt 5,0 kPa bis 5,0 MPa und vorzugsweise 10 kPa bis 1 MPa bei 20 °C erzeugt.

Der erfindungsgemäße Klebstoff hat folgende Vorteile:
- Er benötigt bei normalem Raumklima (20 °C und 50 % relative Luftfeuchtigkeit) keine oder nur wenig Verpackung.
- Er ist nicht kennzeichnungspflichtig.
- Er ist schwer entflammbar.
- Er wird mechanisch durch Reiben mit leichtem Druck aktiviert.
- Er zieht keine Fäden.
- Die Bindung ist durch Erwärmen wieder lösbar.
- Papier wellt sich beim Verkleben nicht.
- Die Abbindegeschwindigkeit ist sehr hoch: Innerhalb von wenigen Sekunden nach dem Abrieb fühlt sich der Klebstoff wieder trokken (nicht mehr klebrig) an.
- Der Klebstoff läßt sich wegen der schnellen Rekristallisation und der niedrigen Schmelzviskosität leicht herstellen.

Die obigen Eigenschaften gelten vor allem für PES-Bindemittel. Bei andersartigen Bindemitteln konnten zum Teil andere positive Eigenschaften festgestellt werden. So können z.B. die Polyetherurethane aus Textilien leicht auswaschbar sein oder zumindest ihre Bindung mit Wasser wieder lösbar sein. Auch kann die Rekristallisation verzögert sein, so daß eine Korrektur der Klebung möglich ist. Die Erfindung wird durch folgende Beispiele im einzelnen erläutert:

### I Ausgangsstoffe

### 1). Ausgangsstoffe für PES

- Dynacoll 7360, ein teilkristalliner Copolyester auf der Basis von Adipinsäure und Hexandiol mit einer Hydroxylzahl von 27 bis 34 mg KOH/g (DIN 53240), einer Säurezahl < 2 mg/KOH/g (DIN 53402), einem Schmelzpunkt von 60 °C (DSC), einem Erweichungspunkt von 65 °C (R + B, ISO 4625), einer Viskosität von ca. 2000 mPa·s bei 80 °C (Brookfield LVT4) und einer Molmasse (aus Hydroxyzahl) von ca. 3 500.
- Dynacoll 7140, ein amorpher Copolyester auf der Basis von Terephthalsäure, Isophthalsäure, Ethylenglykol, Butandiol-1,4 und Hexandiol mit einer Hydroxyzahl von 18 bis 24 mg KOH/g (DIN 53240), einer Säurezahl < 2 mg KOH/g (DIN 53402), einer Glasübergangstemperatur von ca. +40 °C (DSC), einem Erweichungspunkt von 90 °C (R + B, ISO 4625), einer Viskosität von 100 mPa·s bei 130 °C (Brookfield LVT 4) und einer Molmasse von ca. 5500 aus der Hydroxylzahl.
- Dynacoll 7110, ein amorpher Copolyester zum größten Teil auf der Basis von Terephthalsäure, Pentandiol-1,4 und Hexandiol mit einer Hydroxylzahl von 50 bis 60 mg KOH/g (DIN 53240), einer Säurezahl von 8 bis 12 mg KOH/g (DIN 53402), einer Glasübergangstemperatur von +10 °C (DSC), einem Erweichungspunkt von 60 °C (R + B, ISO 4625), einer Viskosität von 10 Pa·s bei 100 °C (Brookfield LVT 4) und einer Molmasse aufgrund der Hydroxyzahl von 2000.
- Dynacoll 7220, ein flüssiger Copolyester auf der Basis von Terephthalsäure, Adipinsäure, 2-Methyl-1,4-Butandiol und Butandiol-1,4 mit einer Hydroxyzahl von 27 bis 34 mg KOH/g (DIN 53240), einer Säurezahl von < 2 mg KOH/g (DIN 53402), einer Glasübergangstemperatur von -20 °C (DSC), einer Viskosität von 5 Pa·s bei 100 °C (Brookfield LVT 4) und einer Molmasse von ca. 3500 aus der Hydroxyzahl.
- Dynacoll 7340, ein teilkristallinen Copolyester mit einer Hydroxylzahl von 27 bis 34 mg KOH/g (DIN 53240), einer Säurezahl von < 2 mg KOH/g (DIN 53 402), einem Schmelzpunkt von 92 °C (DSC), einer Glasübergangstgemperatur von -40 °C (DSC), einem Erweichungspunkt von 100 °C (R + B, ISO 4625), einer Viskosität von 3 Pa·s bei 130 °C (Brookfield LVT 4) und einer Molmasse von ca. 3500 aus der Hydroxyzahl.
- Dynacoll 8350, ein Carboxylgruppen-haltiger Copolyester mit einer Säurezahl von 26 bis 30 mg KOH/g (DIN 32402), einer Glasübergangstemperatur von -50 °C (DSC), einer Viskosität von 140 Pa·s bei 20 °C (Brookfield LVT 4) und einem Molekulargewicht von ca. 4000.
- Dynacoll 8250, ein Carboxylgruppen-haltiger Copolyester mit einer Säurezahl von 15 bis 19 mg KOH/g (DIN 32402); einem Glasübergangspunkt von -50 °C (DSC), einer Viskosität von 140 Pa·s bei 20 °C (Brookfield LVT 4) und einem Molekulargewicht von 6000.
   Dynacoll ist eine Marke der Fa. Hüls AG.
- Capa 240 ist eine Marke der Fa. Interox Chemicals Ltd. für ein lineares Poly-epsilon-Caprolacton mit einer Hydroxyzahl von 28 mg KOH/g, einer Säurezahl von < 0,5 mg KOH/g, einem Schmelzbereich von 55 bis 60 °C und einem Molekulargewicht von ca. 4000.
- PES1 ist ein Polyesterurethan aus Dynacoll 7360 und Desmodur W im Molverhältnis 2 : 1.
- PES2 ist ein Polyesterurethan aus Dynacoll 7360, Dynacoll 7140 und Desmodur W im Molverhältnis 1 : 2 : 2.
- PES3 ist ein Polyesterurethan aus Dynacoll 7360 und TMXDI im Molverhältnis 2 : 1.
- PES4 ist ein Polyesterurethan aus Dynacoll 7360 und IPDI im Molverhältnis 2 : 1.
- PES5 ist ein Polyesterurethan aus Dynacoll 7360 und 2,4'-MDI im Molverhältnis 2 : 1.
- PES6 ist ein mit Octyldodecanol-Endgruppen modifiziertes Polyesterurethan: Dynacoll 7360 und IPDI werden im Molverhältnis 2 : 3 umgesetzt. In einem weiteren Schritt wird mit Octyldodecanol umgesetzt, so daß der NCO-Gehalt unter 0,01 % liegt und das Molverhältnis Polyester : Diisocyanat : Alkohol = 2 : 3 : 2 beträgt.
- Foral-85 ist eine Marke der Fa. Hercules für einen hydrierten Kolophonium-Glycerin-Ester mit einer Säurezahl von 9 mg KOH/g, einer Erweichungstemperatur von 80 °C (R + B) und einer Viskosität von 100 mPa·s bei 160 °C (Brookfield).
- Kristalex F85 ist eine Marke der Fa. Hercules für ein α-Methylstyrol/Styrol-Copolymer mit einem Erweichungspunkt bei ca. 85 °C (R + B).
- Bevitak 95 ist einem Marke der Fa. Bergvik für einen Tackifier.
- Desmodur W ist eine Marke der Fa. Bayer für 12-H-MDI.

### 2. Ausgangsstoffe für Polyurethane

a)
   - Diisocyanat = TMXDI, IPDI, MDI
   - Triisocyanat aus Hexamethylendiisocyanat (Tolonate HDT, Fa. Rhone-Poulenc)
b) Diole:
   - Loxanol = 1,12-C₁₈-Diol
   - DMPA = Dimethylolpropionsäure
   - Pluronic 6800 = Blockcopolymer PEG-PPG-PEG mit 20 % PPG und MW = 8500
   - PTHF 2000 = Polytetrahydrofuran mit MW = 2000
   - PEG 6000 = Polyethylenglykol mit MW = 6000
   - Abitol E ist eine Handelsmarke der Fa. Hercules für einen technischen Hydroabiethylalkohol mit 4,75 % OH und einer Viskosität von 40000 mPas bei 40 °C,
   - Terathane 1000 ist eine Handelsmarke der BASF für ein Polytetramethylenetherglykol der Molmasse 1000,
   - WS 1 ist ein Umsetzungsprodukt von Terathane 1000 und Desmodur V 44 im Verhältnis OH : NCO = 1 : 1,5, wobei überschüssige NCO-Gruppen mit C-12/C-10 Alkohol im Verhältnis 20 : 80 umgesetzt wurden,
   - WS2 ist ein Umsetzungsprodukt folgender Ausgangsstoffe in dem angegebenen Verhältnis:
      Terathane 1000 / Tolonate HDT / Abitol E / C-16-Alkohol = 31,4 / 35,6 / 9,4 / 23,6,
   - WS3 ist ein Umsetzungsprodukt folgender Ausgangsstoffe im angegebenen Verhältnis:
      Terathane 1000 / Tolonate HDT / Abitol E / C-12-Alkohol = 22,5 / 31,8 / 14,7 / 16,1,
   - WS4 ist ein Umsetzungsprodukt folgender Ausgangsstoffe im angegebenen Verhältnis:
      Terathane 1000 / Tolonate HDT / Abitol E / C-14-Alkohol / C-16-Alkohol = 21,5 / 35,6 / 14,3 / 5,1 / 13,5.

### 3. Zusätze

- PEG 600 = Polyethylenglykol mit MW = 600
- PEG 1550 = Polyethylenglykol mit MW = 1550
- PEG 35000 = Polyethylenglykol mit MW = 35000
- Bentonit
- Ca-Stearat

### II Herstellung

1. In den Beispielen I. la - g sowie III. wurde das PU analog zu Beispiel I. 2 hergestellt; allerdings wurden die Diole mitentwässert.
2. In den Beispielen I. 2a - k wurde das PU folgendermaßen hergestellt:
   Das PEG 6000 (Lipoxol, Hüls) und die Dimethylolpropionsäure (Angus Chemie) werden 2 h bei 80 °C im Ölpumpenvakuum entwässert. Danach folgt die Zugabe von m-TMXDI (Cyanamid) und das Aufheizen auf 145 °C. Nach 2 h ist der theoretische NCO-Gehalt von = 0 % Rest-NCO erreicht.
3. Der Klebstoff wurde aus dem Bindemittel und den Zusätzen folgendermaßen hergestellt:
   Die einzelnen Komponenten wurden zusammengegeben und gemeinsam unter Rühren aufgeschmolzen. Es wird solange gerührt, bis eine homogene Mischung vorliegt. Die Schmelze wurde in Formkörper gegossen und nach 24 h aus diesen entfernt.

Den Beispielen liegen folgende Zusammensetzungen zugrunde (Angabe in Gewichtsteilen):

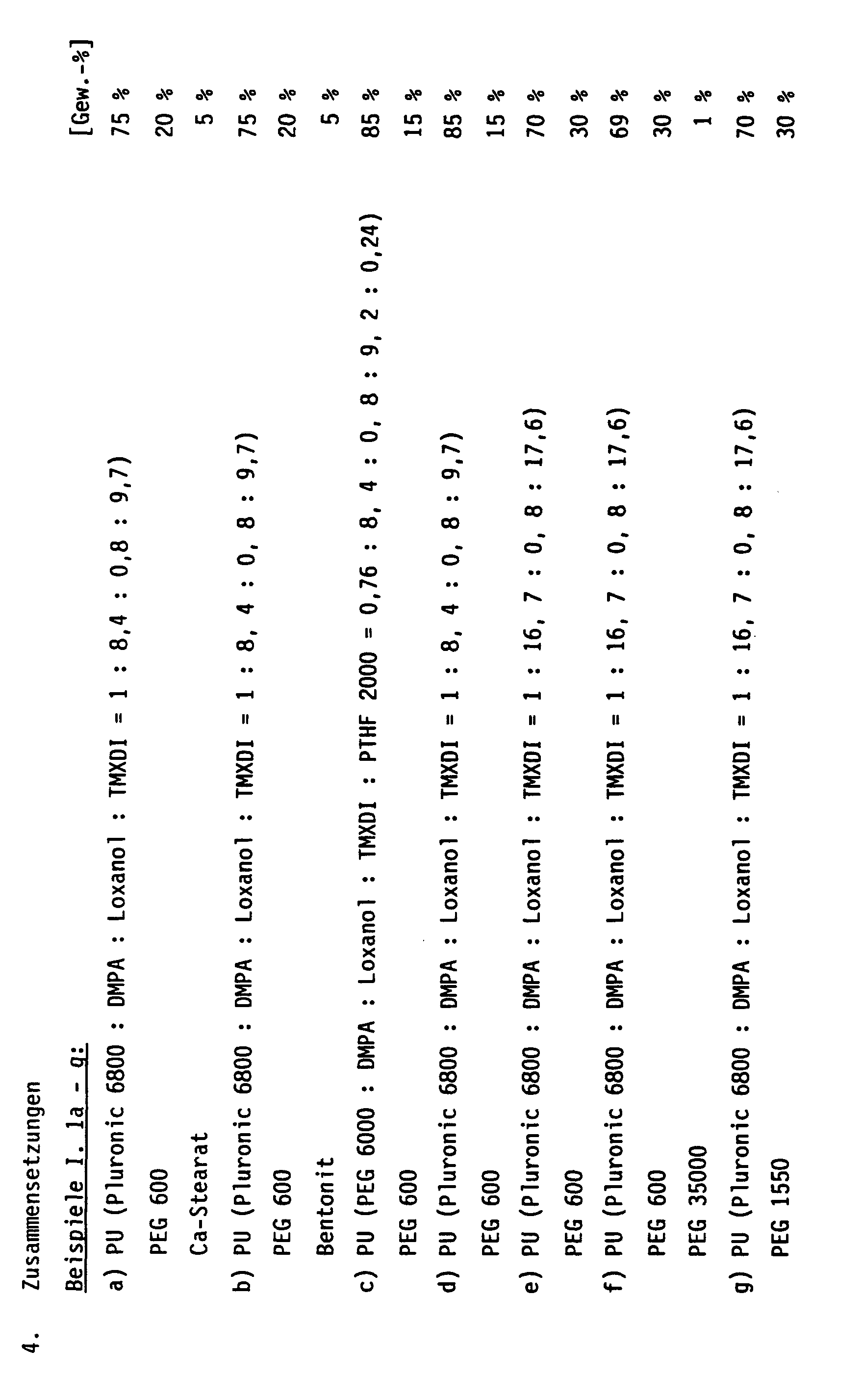

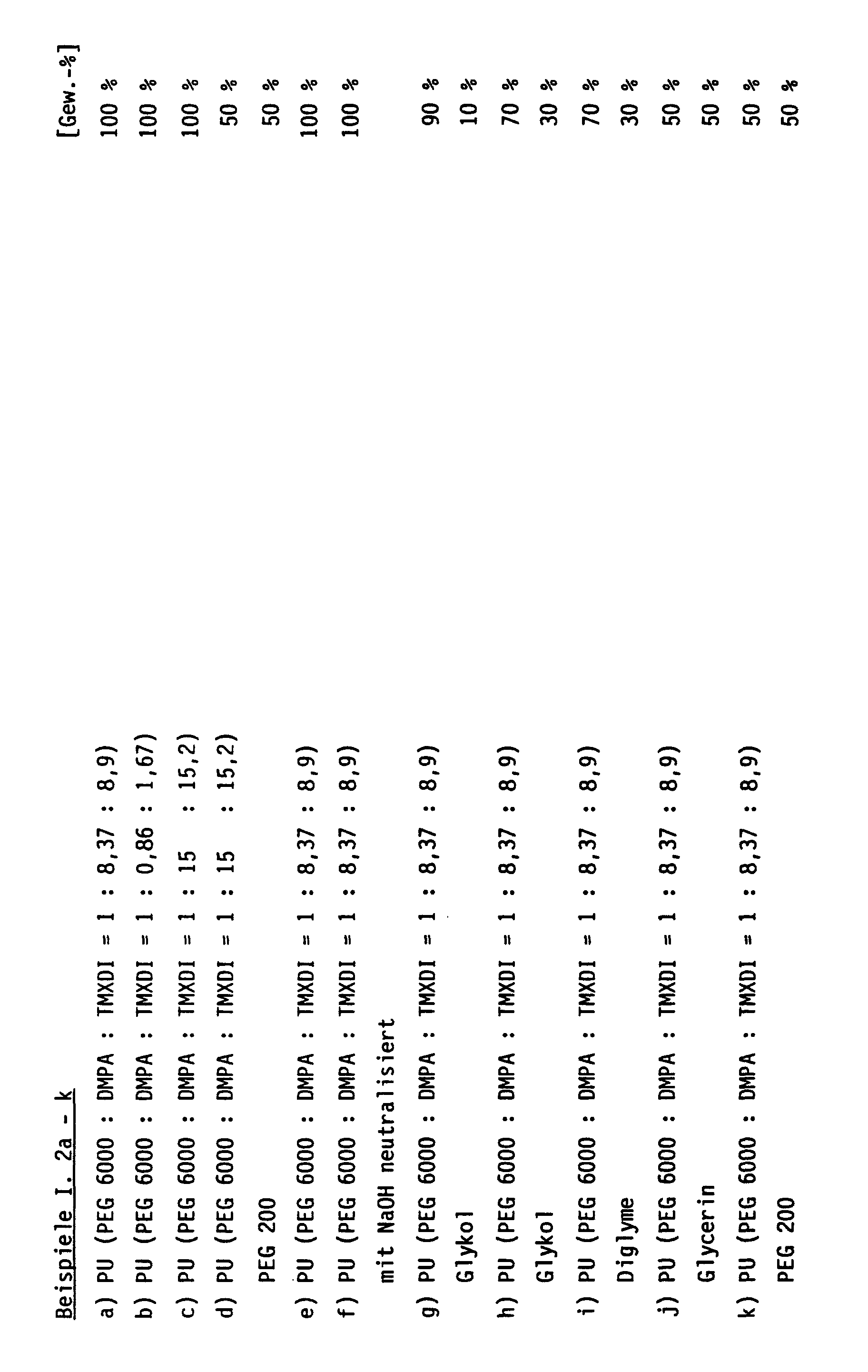

### Beispiele II. 1a - y:

a Dynacoll 7360 : Dynacoll 7140 = 30 : 70
b Dynacoll 7360 Dynacoll 7140 : Ca-Stearat = 30 : 70 : 5
c Dynacoll 7360 Dynacoll 7110 = 30 : 70
d Dynacoll 7360 Dynacoll 7110 = 20 : 80
e Dynacoll 7340 Dynacoll 7140 = 30 : 70
f Dynacoll 8350 Dynacoll 7220 = 30 : 70
g Dynacoll 8350 Dynacoll 8250 = 50 : 50
h Dynacoll 7360 Dynacoll 7140 : Butylbenzylphthalat = 28,5 : 66,5 : 5
i Dynacoll 7360 : Dynacoll 7140 : Butylbenzylphthalat = 27 : 63 : 10
j Dynacoll 7360 : Dynacoll 7140 : Butylbenzylphthalat = 24 : 56 : 20
k Dynacoll 7360 : Dynacoll 7110 : Foral 85 = 30 : 60 : 10
l Dynacoll 7360 : Dynacoll 7110 : Bevitack 95 = 30 : 60 : 10
m Dynacoll 7360 : Dynacoll 7110 : Kristalex r F85 = 30 : 60 : 10
n Dynacoll 7110 : PES1 = 70 : 30
o Dynacoll 7360 : PES2 = 10 : 90
p Capa 240 : Dynacoll 7110 = 30 : 70
q Dynacoll 7360 : Dynacoll 7110 : Bentonit = 30 : 70 : 10
r Dynacoll 7360 : Dynacoll 7110 : Butylbenzylphthalat = 20 : 80 : 2,5.
s Dynacoll 7110 : PES3 = 70 : 30.
t Dynacoll 7360 : Dynacoll 7110 : Polyethylacrylat = 20 : 80 : 5.
u Dynacoll 7110 : PES4 = 70 : 30
v Dynacoll 7110 : PES5 = 70 : 30
w Dynacoll 7110 : PES6 = 60 : 40
   Mischungen aus Polyesterurethanen und Polyetherurethanen
x - PES 4 33,3 %
   - (Pluronic 6800 : DMPA : Loxanol : TMXDI = 1 : 8,4 : 0,8 : 9,7) 66,7 %
y - PES 4 7,5 %
   - (Pluronic 6 800 : DMPA : Loxanol : TmXDI = 1 : 8,4 : 0,8 : 9,7) 63,7 %
   - Dynacoll 7110 17,5 %
   - PEG 600 11,3 %

### Beispiele III. 1 a) - m)

a) Terathane 1000 : Desmodur 44 : Abitol E : Dynacoll 7360 :
   C-14-Alkohol
   51,3 : 20,1 : 5,7 : 19,6 : 3,3,
b) Terathane 1000 : Desmodur 44 : Abitol E : Dynacoll 7360 :
   C-14-Alkohol
   56,0 : 22,0 : 6,3 : 10,9 : 4,9,
c) Terathane 1000 : Tolonate HDT : Abitol E : C-14-Alkohol
   32,7 : 37,1 : 17,6 : 15,3,
d) Terathane 1000 : Tolonate HDT : C-14-Alkohol 34,7 : 39,4 : 25,9,
e) Terathane 1000 : Tolonate HDT : Abitol E : C-16-Alkohol 31,4 : 35,6 : 9,9 : 23,6,
f) Terathane 1000 : Tolonate HDT : Abitol E : C-16-Alkohol :
   C-8-Alkohol
   32,6 : 36,9 : 14,8 : 10,2 : 5,5,
g) WS1 : Dynacoll 7360 : Dynacoll 7130
   62,5 : 33,3 : 4,2,
h) WS2 : Dynacoll 7360 : Dynacoll 7140 : Butylbenzylphthalat :
   Aluminiumsilikat: Kristallex F 85
   60 : 26,7 : 3,3 : 5,3 : 1,3 : 18,3,
i) WS 1 : Dynacoll 7360 : Dynacoll 7100 : Abitol E :
   Butylbenzylphthalat : Aluminiumsilikat : Kristallex F 85
   57,3 : 21,3 : 1,0 : 1,3 : 8,5 : 2,6 : 5,3,
k) WS3 : Dynacoll 7360 : Dynacoll 7100 : Butylbenzylphthalat :
   Aluminiumsilikat
   57,7 : 30,8 : 3,9 : 6,2 : 1,5,
l) WS4 : Dynacoll 7140
   88,3 : 11,8,
m) WS4 : Dynacoll 7140
   65,2 : 34,8.

### III Untersuchungen

### 1. Verklebungen

Die Verklebungen wurden generell folgendermaßen durchgeführt: Druck ca. 500 kPa, Geschwindigkeit: ca. 100 cm/sec, Raumtemperatur, Filmstärke: ca. 50 µm.

### 2. Durchgeführte Tests auf:

a) Klebkraft nach 10 sec: Verkleben eines Kartonstreifens als Ring mit anschließendem Bewerten der Klebedauer (Angabe der Zeit): Verwendet wird ein Kartonstreifen mit der Größe 29,1 cm x 5 cm und der Stärke 250 g/m². Von der Kante aus gemessen, wird auf der einen Schmalseite des Streifens einseitig ein 2 cm breiter Bereich mit Klebstoff beschichtet. Danach wird der Streifen zu einem Ring gelegt und die Klebestelle 10 Sekunden zusammengedrückt. Gemessen wird die Zeit, bis der Ring wieder aufspringt.
b) Klebekraft nach 1 Tag: Verkleben von Kopierpapier der Fa. Soennecken, nämlich 5015 Speziel Copier. Test auf Papierausriß nach einem Tag (Angabe des prozentualen Papierausrisses bzw. Ausriß (P) / trennt auf (T).
c) Zugscherfestigkeit von Holz/Holz-Verklebungen: Zwei Buchenholz-Prüfkörper werden an ihrem Ende mit Klebstoff eingerieben und so zusammengelegt, daß die beiden mit Klebstoff versehenen Enden 2 cm überlappen (Klebefläche 2 cm x 2,5 cm). Die Prüfkörper werden mit zwei Klammern fixiert und nach 24 Stunden gemessen. Der Meßwert wird in N/mm² angegeben.
d) Abrieb: Aufreiben auf Kopierpapier der Fa. Soennecken, nämlich 5015 Spezial Copier (Angabe von Schulnoten).
e) Kristallinität: Messen der DSC-Kurven (S: Schmelzenthalpie, Schmelzpeaktemperatur. Der Peak kann strukturiert sein bzw. besteht aus mehreren Peaks. Angegeben ist die Temperatur für den größten Peak. - 1. Aufheizen; R: Rekristallisation, Rekristallisationspektemperatur - 2. Aufheizen; -60 °C bis +100 °C, 10 °C/min, Abkühlen im Stickstoffstrom).
f) Abbindeverhalten - Beurteilen der Kristallinität im Polarisationsmikroskop (Angabe der Kristallisationstendenz schnell, langsam, keine).
g) Schmelzviskosität (Epprecht): 125 °C [Pas]

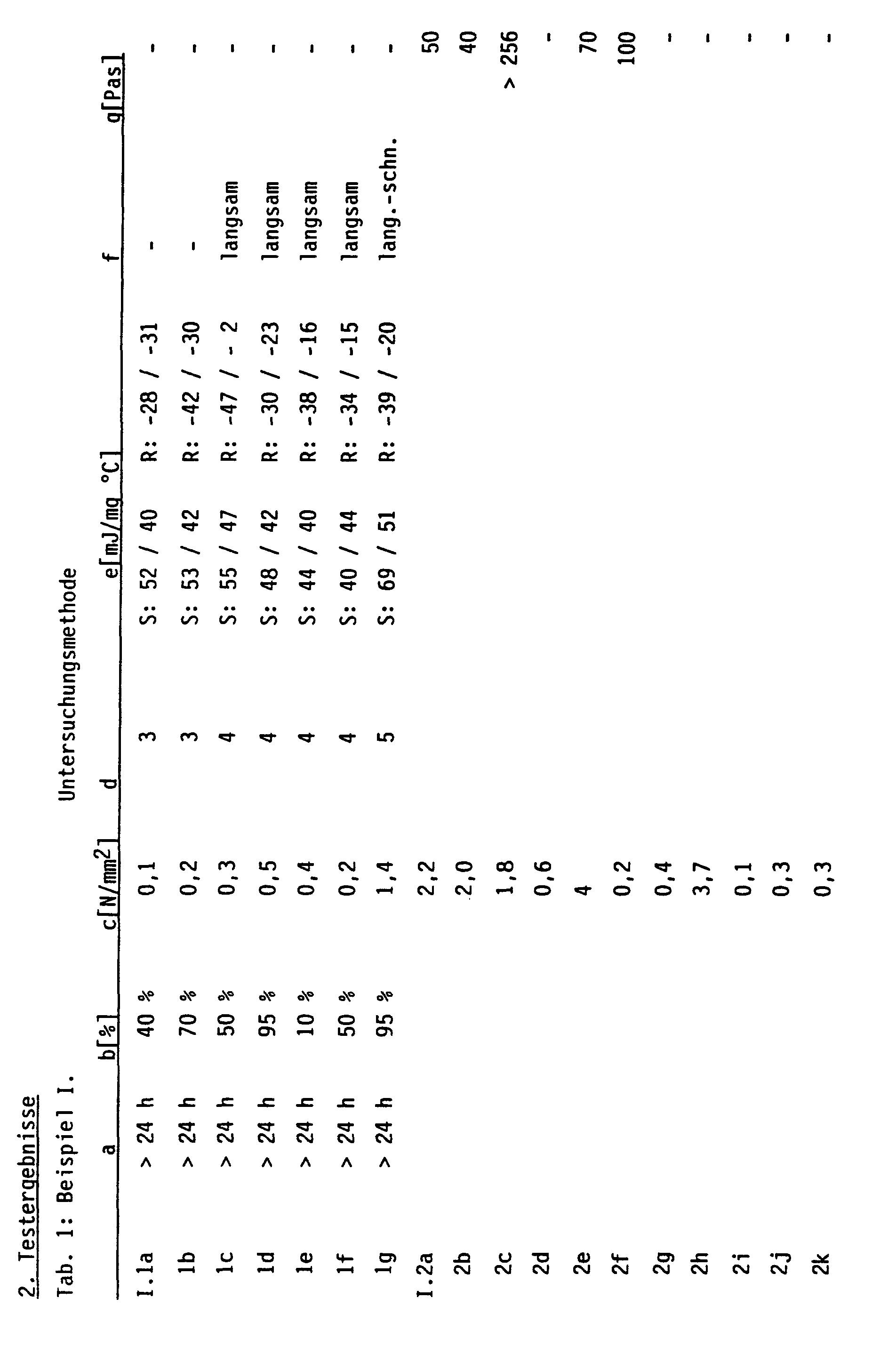

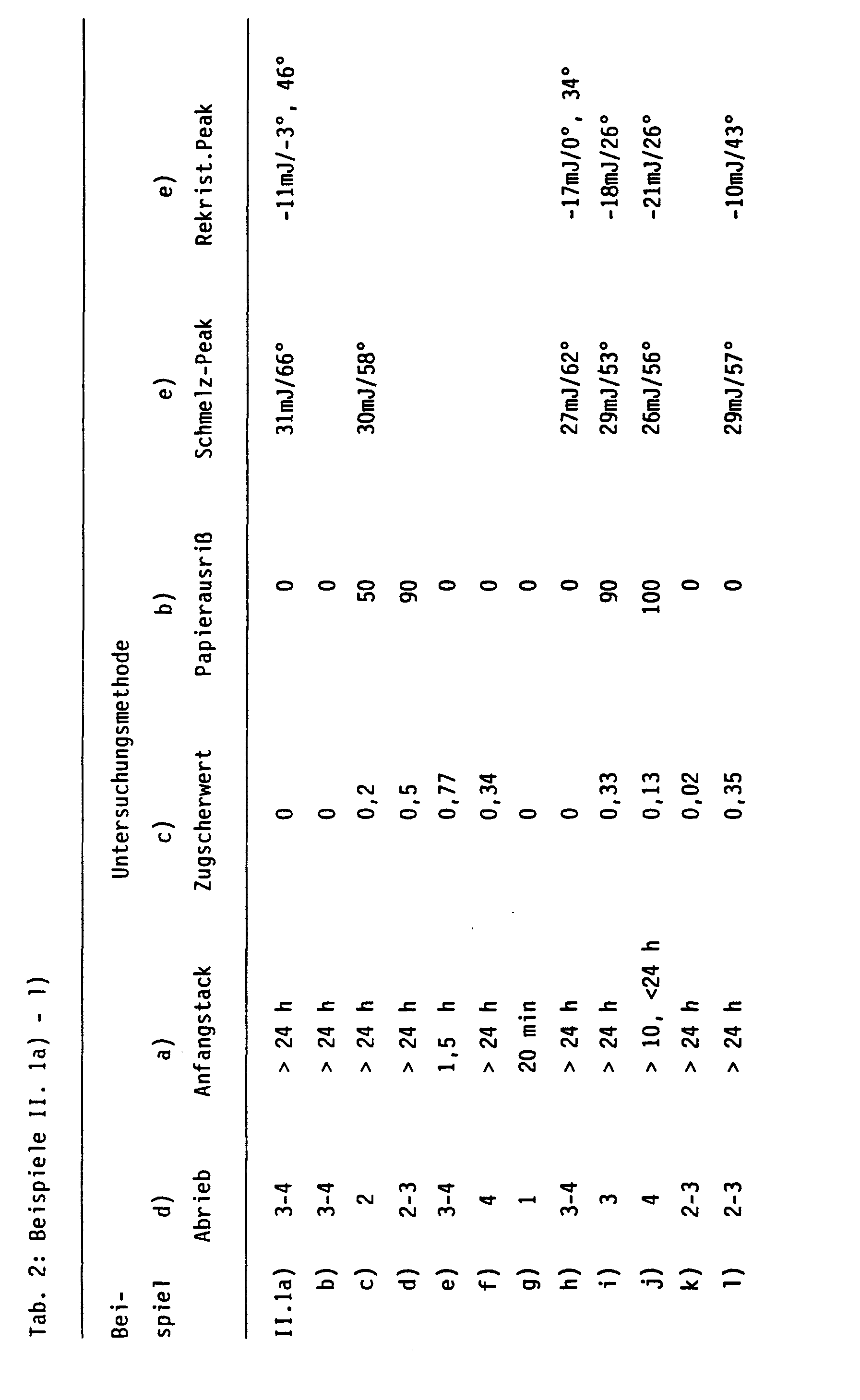

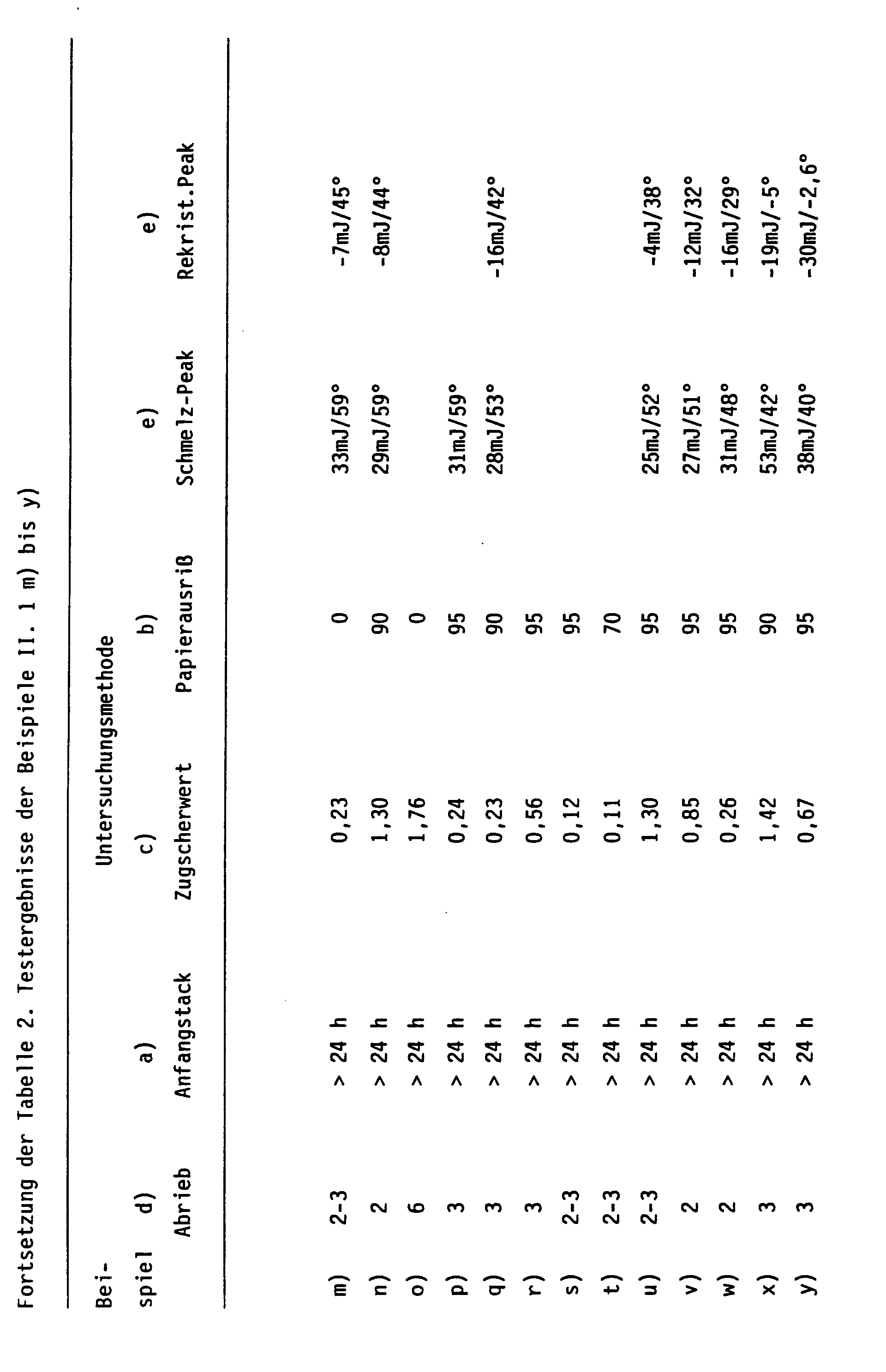

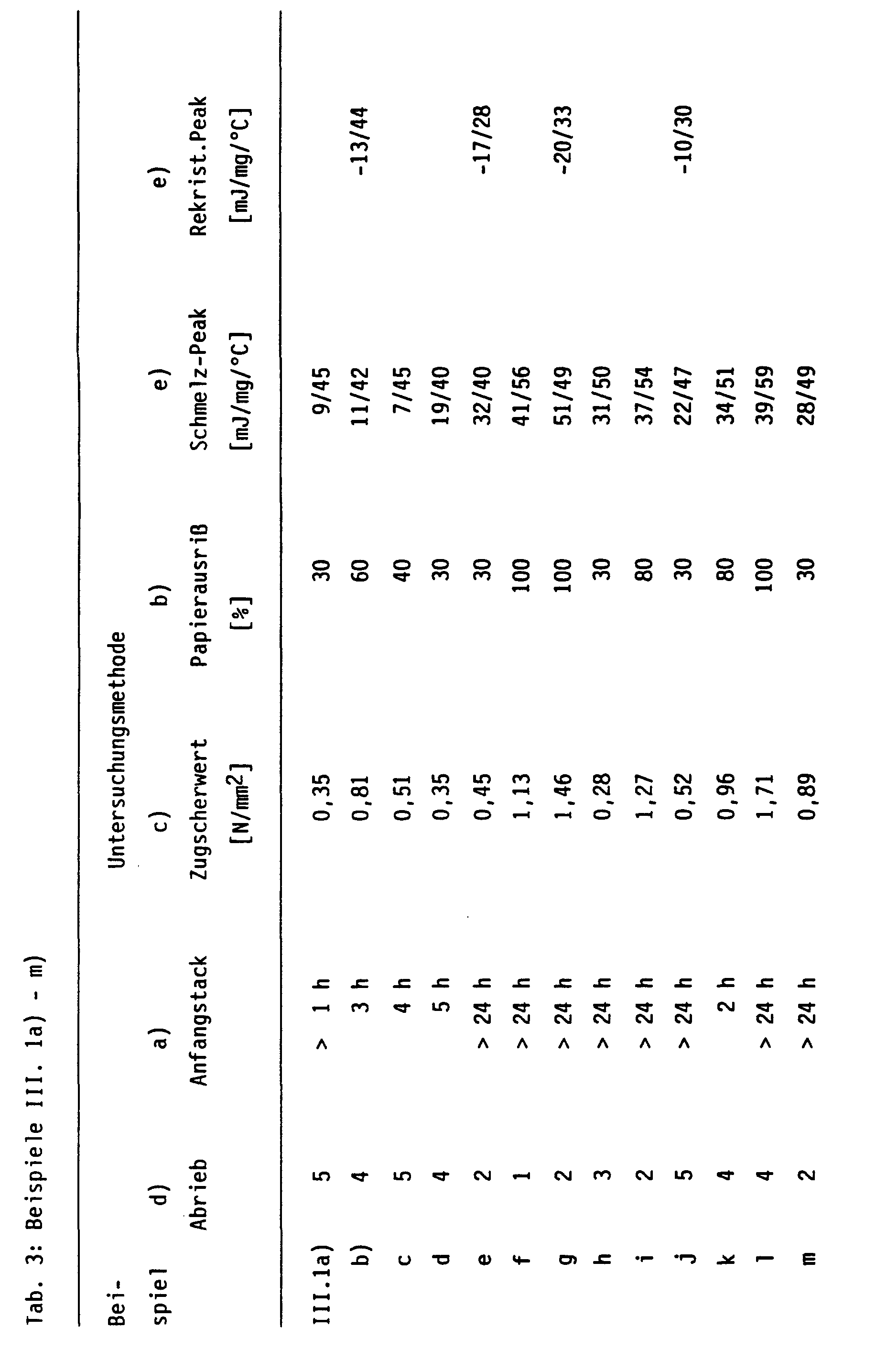

## Patentansprüche

1. Teilkristalliner bei Raumtemperatur fester Klebstoff mit einem Wassergehalt von 0 bis 15 Gew.-% gemessen nach Karl Fischer, **gekennzeichnet** a) durch einen Kristallisationsgrad, ermittelt durch DSC, im Bereich von -40 °C bis +120 °C, dem eine Schmelzenthalpie von 10 bis 150 mJ/mg, bevorzugt 15 bis 80 mJ/mg, weiter bevorzugt 20 bis 70 mJ/mg entspricht, b) durch mindestens eine, Kristallisationstemperatur, ermittelt durch DSC, mit einem Extremum des Schmelzpeaks bei 20 bis 110 °c, bevorzugt bei 30 bis 80 °C sowie c) durch eine Kristallisationsgeschwindigkeit von 30 sec bis 30 min, bestimmt durch Beobachtung in einem Polarisationsmikroskop, wobei der Klebstoff aus 25 bis 100 Gew.-% Bindemittel und 0 bis 75 Gew.-% Zusätzen besteht und das Bindemittel aus
a) mindestens einem teilkristallinen und b) mindestens einem amorphen und/oder flüssigen Polyester, Polyesteramid oder Polyesterurethan mit Molekulargewichten MG_{w} von 1 000 bis 20 000 besteht.

2. Klebstoff nach Anspruch 1, **dadurch gekennzeichnet, daß** er neben dem Bindemittel noch folgende Zusätze enthält:
a) 0 bis 50 Gew.-% mindestens eines kristallinitätsmodifizierenden Zusatzes,
b) 0 bis 20 Gew.-% mindestens eines feinteiligen wasserunlöslichen Pigments oder Füllstoffs, insbesondere aus folgender Gruppe: Alkalistearate, Graphit, Talkum, TiO₂, Bentonit, Wollastonit, Kreide und pyrogene Kieselsäure (Aerosil), Magnesiumoxid und Glasfasern,
c) 0 bis 20 Gew.-%, bevorzugt 0 bis 10 % mindestens eines nichtflüchtigen Weichmachers.
d) 0 bis 5 Gew.-% mindestens eines der folgenden Zusatzstoffe:
Antioxidantien, Konservierungsstoffe, Farbstoffe und Geruchsstoffe,
e) 0 bis 5 Gew.-% Wasser und
f) 0 bis 30 Gew.-% mindestens eines Tackifiers.

3. Klebstoff nach Anspruch 1, **dadurch gekennzeichnet, daß** er aus 25 bis 100 Gew.-% an Bindemittel und 0 bis 75 Gew.-% an Zusätzen besteht, wobei das Bindemittel auf Polyurethan bzw. einem Gemisch aus Polyurethanen basiert, welches aus folgenden Komponenten herstellbar ist:
a) mindestens ein aliphatisches oder aromatisches Diisocyanat, vorzugsweise aus folgender Gruppe: Diisocyanato-diphenylmethan (MDI), Diisocyanatotoluol (TDI), Hexamethylen-diisocyanat (HDI), Isophorondiisocyanat (IPDI) sowie vor allem Tetramethylxylylen-diisocyanat (TMXDI),
b) mindestens ein kristallisierendes Polyester- oder Polyetherdiol, insbesondere aus folgender Gruppe:
- Polyethylenglykol mit einem Molekulargewicht (Zahlenmittel) von 200 bis 40 000,
- Polytetrahydrofuran mit einem Molekulargewicht von 200 bis 4 000,
- Copolymer aus Ethylenoxid und Propylenoxid mit einem Molekulargewicht von 200 bis 40 000, vorzugsweise einem Blockcopolymer mit der Struktur Polyethylenglykol (PEG)/Polypropylenglykol (PPG)/Polyethylenglykol (PEG) und mit einem PEG-Anteil von 10 bis 80 Gew.-% sowie
- ein Polyesterdiol, insbesondere Polycaprolacton mit einem Molekulargewicht von 200 bis 50 000,
c) gegebenenfalls mindestens ein Diol, welches zur Ionenbildung befähigt ist, insbesondere zur Bildung von Carboxylaten sowie
d) gegebenenfalls mindestens ein 3- oder höherwertiges Polyol wie Glycerin und Trimethylolpropan (TMP) und
e) gegebenenfalls mindestens ein hydrophobes Diol, insbesondere aus der Gruppe:
- Polypropylenglykol mit einem Molekulargewicht von 200 bis 4 000 und
- Alkandiol mit 1 bis 100, bevorzugt 2 bis 50, besonders bevorzugt bis 5 bis 30 C-Atomen,
wobei das Verhältnis der Isocyanatgruppen zu den
Hydroxylgruppen im Bereich von 0,5 bis 1,2, insbesondere von 0,7 bis 1 variieren soll.

4. Klebstoff nach Anspruch 1 oder 3, **dadurch gekennzeichnet, daß** er neben dem Bindemittel noch folgende Zusätze enthält:
a) 0 bis 50 Gew.-% mindestens eines kristallinitätsmodifizierten Zusatzes, insbesondere aus folgender Gruppe: PEG, PPG, Tetrahydrofuran (THF) und Polyester,
b) 0 bis 20 Gew.-% mindestens eines feinteiligen wasserunlöslichen Pigments oder Füllstoffs, insbesondere aus folgender Gruppe: Alkalistearate, Graphit, Talkum, TiO₂, Bentonit, Wollastonit, Kreide und pyrogene Kieselsäure (Aerosil),
c) 0 bis 50 Gew.-%, bevorzugt 0 bis 30 % und insbesondere 0 bis 10 % mindestens eines nichtflüchtigen Weichmachers, insbesondere aus der Gruppe von folgenden wassermischbaren hydrophilen Weichmachern: Glycerin, Ethylenglykol und Diglyme sowie
d) 0 bis 5 Gew.-% mindestens eines der folgenden Zusatzstoffe: Antioxidantien, Konservierungsstoffe, Farbstoffe und Geruchsstoffe und
e) 0 bis 15, insbesondere 0 bis 5 Gew.-% Wasser.

5. Klebstoff nach mindestens einem der Ansprüche 1 bis 4, **dadurch gekennzeichnet, daß** er keine reaktiven Gruppen enthält und weniger als 10, insbesondere weniger als 5 % an flüchtigen Lösungsmitteln.

6. Klebstoff nach mindestens einem der Ansprüche 1 bis 5, **gekennzeichnet durch** seine geometrische Form, insbesondere in Form eines Stiftes mit kreisförmigem, ellipsenförmigem oder eckigem Querschnitt.

7. Herstellung des Klebstoffes nach mindestens einem der Ansprüche 1 bis 6, **dadurch gekennzeichnet, daß** man
- das Bindemittel lösungsmittelfrei gegebenenfalls in Gegenwart von einem Katalysator herstellt,
- das Bindemittel mit den Zusätzen sichtbar homogen mischt und
- den Klebstoff formt.

8. Verfahren zum Verkleben von Substraten mit einem Klebstoff gemäß Anspruch 1, **dadurch gekennzeichnet, daß** man den Klebstoff durch innere und/oder äußere Reibung aktiviert, die Substrate mit dem dann klebrigen Klebstoff dazwischen zusammenfügt und schließlich das Gefüge durch Ruhenlassen innerhalb von 30 sec bis 30 min abbindet.

9. Verfahren nach Anspruch 8, **dadurch gekennzeichnet, daß** der feste Klebstoff bei einer Gleitreibung auf einem Papier eine Filmdicke von 2 bis 200 µm, bevorzugt 10 bis 100 µm, bei einer Geschwindigkeit von 1 bis 500 cm/sec, bevorzugt 2 bis 100 cm/sec und bei einem Druck von 1,0 kPa bis 10 MPa, bevorzugt 5,0 kPa bis 5,0 MPa und vorzugsweise 10 kPa bis 1 MPa bei 20 °C erzeugt.

10. Verfahren zum Verkleben von Substraten nach Anspruch 8 oder 9 unter Verwendung des Klebstoffes nach mindestens einem der Ansprüche 1 bis 6, **dadurch gekennzeichnet, daß** vorzugsweise mindestens ein Substrat Papier, Pappe, Holz oder Textil ist.

11. Verfahren zum Lösen von Verklebungen, die gemäß dem Verfahren von Anspruch 10 hergestellt wurden, **dadurch gekennzeichnet, daß** die Verklebung durch Erwärmen oder durch Einwirkung von Wasser wieder gelöst wird.

## Claims

1. A partly crystalline adhesive solid at room temperature with a water content of 0 to 15% by weight, as measured by the Karl Fischer method, **characterized** a) by a degree of crystallization, as determined by DSC, in the range from -40°C to +120°C to which corresponds an enthalpy of fusion of 10 to 150 mJ/mg, more particularly 15 to 80 mJ/mg and preferably 20 to 70 mJ/mg, b) by at least one crystallization temperature, as determined by DSC, at 20 to 110°C and preferably at 30 to 80°C and c) by a crystallization rate of 30 seconds to 30 minutes, as determined by observation under a polarization microscope, the adhesive consisting of 25 to 100% by weight of binder and 0 to 75% by weight of additives and the binder consisting of a) at least one partly crystalline land b) at least one amorphous and/or liquid polyester, polyester amide or polyester urethane with molecular weights MW_{w} of 1,000 to 20,000.

2. An adhesive as claimed in claim 1, **characterized in that**, in addition to the binder, it contains the following additives:
a) 0 to 50% by weight of at least one crystallinity-modifying additive,
b) 0 to 20% by weight of at least one fine-particle water-insoluble pigment or filler, more particularly from the following group: alkali metal stearates, graphite, talcum, TiO₂ bentonite, wollastonite, chalk and pyrogenic silica (Aerosil), magnesium oxide and glass fibres,
c) 0 to 20% by weight and preferably 0 to 10% by weight of at least one non-volatile plasticizer,
d) 0 to 5% by weight of at least one of the following additives: antioxidants, preservatives, dyes and perfumes,
e) 0 to 5% by weight of water and
f) 0 to 30% by weight of at least one tackifier.

3. An adhesive as claimed in claim 1, **characterized in that** it consists of 25 to 100% by weight of binder and 0 to 75% by weight of additives, the binder being based on polyurethane or a mixture of polyurethanes which can be produced from the following components:
a) at least one aliphatic or aromatic diisocyanate, preferably from the following group: diisocyanatodiphenylmethane (MDI), diisocyanatotoluene (TDI), hexamethylene diisocyanate (HDI), isophorone diisocyanate (IPDI) and above all tetramethyl xylxylene diisocyanate (TMXDI),
b) at least one crystallizing polyester or polyether diol, more particularly from the following group:
- polyethylene glycol with a molecular weight (number average) of 200 to 40,000,
- polytetrahydrofuran with a molecular weight of 200 to 4,000,
- copolymer of ethylene oxide and propylene oxide with a molecular weight of 200 to 40,000, preferably a block copolymer with the structure polyethylene glycol (PEG)/polypropylene glycol (PPG)/polyethylene glycol (PEG) and with a PEG content of 10 to 80% by weight, and
- a polyester diol, more particularly polycaprolactone with a molecular weight of 200 to 50,000,
c) optionally at least one diol capable of forming ions, more particularly carboxylate ions,
d) optionally at least one polyol with a functionality of 3 or higher, such as glycerol and trimethylolpropane (TMP), and
e) optionally at least one hydrophobic diol, more particularly from the following group:
- polypropylene glycol with a molecular weight of 200 to 4,000 and
- alkanediol containing 1 to 100, preferably 2 to 50 and more preferably 5 to 30 carbon atoms,
the ratio of the isocyanate groups to the hydroxyl groups being variable from 0.5 to 1.2:1 and more particularly from 0.7 to 1:1.

4. An adhesive as claimed in claim 1 or 3, **characterized in that**, in addition to the binder, it contains the following additives:
a) 0 to 50% by weight of at least one crystallinity-modifying additive, more particularly from the following group: PEG, PPG, tetrahydrofuran (THF) and polyester,
b) 0 to 20% by weight of at least one fine-particle water-insoluble pigment or filler, more particularly from the following group: alkali metal stearates, graphite, talcum, TiO₂, bentonite, wollastonite, chalk and pyrogenic silica (Aerosil),
c) 0 to 50% by weight, preferably 0 to 30% by weight and more particularly 0 to 10% by weight of at least one non-volatile plasticizer, preferably from the group of following water-miscible hydrophilic plasticizers: glycerol, ethylene glycol and diglyms,
d) 0 to 5% by weight of at least one of the following additives: antioxidants, preservatives, dyes and perfumes, and
e) 0 to 15% by weight and, more particularly, 0 to 5% by weight of water.

5. An adhesive as claimed in at least one of claims 1 to 4, **characterized in that** it contains no reactive groups and less than 10% and, more particularly, less than 5% of volatile solvents.

6. An adhesive as claimed in at least one of claims 1 to 5, **characterized by** its geometric form, more particularly in the form of a stick of circular, elliptical or angular cross-section.

7. A process for producing the adhesive claimed in at least one of claims 1 to 6, **characterized in that**
- the binder is produced without a solvent, optionally in the presence of a catalyst,
- the binder is visibly uniformly mixed with the additives and
- the adhesive is shaped.

8. A process for bonding substrates with the adhesive claimed in claim 1, **characterized in that** the adhesive is activated by internal and/or external friction, the substrates are joined together with the now tacky adhesive in between and, finally, the adhesive is allowed to set by leaving for 30 seconds to 30 minutes.

9. A process as claimed in claim 8, **characterized in that** the solid adhesive produces a 2 to 200 µm and preferably 10 to 100 µm thick film when applied to paper at a speed of 1 to 500 cm/sec. and preferably 2 to 100 cm/sec. under a pressure of 1.0 kPa to 10 MPa, preferably 5.0 kPa to 5.0 MPa and more preferably 10 kPa to 1 MPa and at a temperature of 20°C.

10. A process for bonding substrates as claimed in claim 8 or 9 using the adhesive claimed in at least one of claims 1 to 6, **characterized in that** preferably at least one substrate is paper, paperboard, wood or cloth.

11. A process for dissolving bonds produced by the process claimed in claim 10, **characterized in that** the bond is dissolved by exposure to heat or water.

## Revendications

1. Adhésif partiellement cristallin, solide à la température ambiante, possédant une teneur en eau de 0 à 15 % en poids, mesurée conformément à Karl Fisher, **caractérisé** a) par un degré de cristallisation, déterminé par DSC, dans la plage de -40 °C à + 120 °C, auquel correspond une enthalpie de fusion de 10 à 150 mJ/mg, de préférence de 15 à 80 mJ/mg, de manière plus préférée de 20 à 70 mJ/mg, b) par au moins une température de cristallisation, déterminée par DSC, dont la valeur extrême du pic de fusion s'élève de 20 à 110 °C, de préférence de 30 à 80 °C, et c) par une vitesse de cristallisation de 30 secondes à 30 minutes, déterminée par observation dans un microscope de polarisation, l'adhésif étant constitué par un liant à concurrence de 25 à 100 % en poids et par des additifs à concurrence de 0 à 75 % en poids, et le liant étant constitué par a) au moins un membre choisi parmi le groupe comprenant un polyester, un polyesteramide et un polyesteruréthane partiellement cristallin et par b) au moins un membre choisi parmi le groupe comprenant un polyester, un polyesteramide et un polyesteruréthane amorphe et/ou liquide, lesdits polyester, polyesteramide et polyesteruréthane possédant des poids moléculaires MG_{w} de 1000 à 20.000.

2. Adhésif selon la revendication 1, **caractérisé en ce qu'**il contient, à côté du liant, encore les additifs suivants :
a) à concurrence de 0 à 50 % en poids, au moins un additif modifiant la cristallinité ;
b) à concurrence de 0 à 20 % en poids, au moins une matière de charge ou un pigment finement divisé insoluble dans l'eau, en particulier choisi parmi le groupe ci-après comprenant : des stéarates de métaux alcalins, du graphite, du talc, du dioxyde de titane, de la bentonite, de la wollastonite, de la craie et de l'acide silicique pyrogéné (aérosil), de l'oxyde de magnésium et des fibres de verre ;
c) à concurrence de 0 à 20 % en poids, de préférence de 0 à 10 %, au moins un plastifiant non volatil ;
d) à concurrence de 0 à 5 % en poids, au moins un additif choisi parmi le groupe ci-après comprenant : des antioxydants, des conservants, des colorants et des aromatisants ;
e) à concurrence de 0 à 5 % en poids, de l'eau ; et
f) à concurrence de 0 à 30 % en poids, au moins un agent poissseux.

3. Adhésif selon la revendication 1, **caractérisé en ce qu'**il est constitué, à concurrence de 25 à 100 % en poids par un liant et à concurrence de 0 à 75 % en poids par des additifs, le liant étant à base de polyuréthane, respectivement à base d'un mélange de polyuréthanes, que l'on peut préparer à partir des composants suivants :
a) au moins un diisocyanate aliphatique ou aromatique, de préférence choisi parmi le groupe ci-après comprenant : le diisocyanato-diphénylméthane (MDI), le diisocyanato-toluène (TDI), l'hexaméthylène-diisocyanate (HDI), l'isophoronediisocyanate (IPDI), et surtout le tétraméthylxylylène-diisocyanate (TMXDI) ;
b) au moins un polyester- ou un polyéther-diol cristallisant, choisi en particulier parmi le groupe ci-après comprenant :
- du polyéthylèneglycol possédant un poids moléculaire (moyenne en nombre) de 200 à 40.000 ;
- du polytétrahydrofuranne possédant un poids moléculaire de 200 à 4000 ;
- un copolymère d'oxyde d'éthylène et d'oxyde de propylène possédant un poids moléculaire de 200 à 40.000, de préférence un copolymère séquencé présentant la structure polyéthylèneglycol (PEG)/-polypropylèneglycol (PPG)/polyéthylèneglycol (PEG) et possédant une fraction de PEG de 10 à 80 % en poids ; et
- un polyesterdiol, en particulier la polycaprolactone possédant un poids moléculaire de 200 à 50.000 ;
c) le cas échéant, au moins un diol, qui manifeste une capacité à former des ions, en particulier à former des carboxylates ; et
d) le cas échéant, au moins un polyol trivalent ou à valence supérieure, tel que le glycérol et le triméthylolpropane (TMP) ; et
e) le cas échéant au moins un diol hydrophobe, en particulier choisi parmi le groupe comprenant :
- du polypropylèneglycol possédant un poids moléculaire de 200 à 4000 ; et
- un alcanediol contenant de 1 à 100, de préférence de 2 à 50, de manière particulièrement préférée de 5 à 30 atomes de carbone ;
le rapport des groupes isocyanates aux groupes hydroxyle devant varier dans la plage de 0,5 à 1,2, en particulier de 0,7 à 1.

4. Adhésif selon la revendication 1 ou 3, **caractérisé en ce qu'**il contient, à côté du liant, encore les additifs suivants :
a) à concurrence de 0 à 50 % en poids, au moins un additif modifiant la cristallinité, en particulier choisi parmi le groupe comprenant : le PEG, le PPG, le tétrahydrofuranne (THF) et des polyesters ;
b) à concurrence de 0 à 20 % en poids, au moins une matière de charge ou un pigment finement divisé insoluble dans l'eau, en particulier choisi parmi le groupe ci-après comprenant : des stéarates de métaux alcalins, du graphite, du talc, du dioxyde de titane, de la bentonite, de la wollastonite, de la craie et de l'acide silicique pyrogéné (aérosil) ;
c) à concurrence de 0 à 50 % en poids, de préférence de 0 à 30 % et en particulier à concurrence de 0 à 10 %, au moins un plastifiant non volatil, en particulier choisi parmi le groupe ci-après des plastifiants hydrophiles miscibles à l'eau comprenant : le glycérol, l'éthylèneglycol et le diglyme ; et
d) à concurrence de 0 à 5 % en poids, au moins un additif choisi parmi le groupe ci-après comprenant : des antioxydants, des conservants, des colorants et des aromatisants ; et
e) à concurrence de 0 à 15, en particulier de 0 à 5 % en poids, de l'eau.

5. Adhésif selon au moins une des revendications 1 à 4, **caractérisé en ce qu'**il ne contient pas de groupes réactifs et **en ce qu'**il contient des solvants volatils en une quantité inférieure à 10, en particulier en une quantité inférieure à 5 %.

6. Adhésif selon au moins une des revendications 1 à 5, **caractérisé par** sa forme géométrique, en particulier par la forme d'un bâton possédant une section transversale circulaire, ellipsoïde ou polygonale.

7. Préparation de l'adhésif selon au moins une des revendications 1 à 6, **caractérisé en ce que**
- on prépare le liant en l'absence de solvant, le cas échéant en présence d'un catalyseur,
- on soumet le liant à un mélange homogène à l'oeil nu avec les additifs ; et
- on forme l'adhésif.

8. Procédé pour le collage de substrats avec un adhésif selon la revendication 1, **caractérisé en ce qu'**on active l'adhésif par friction interne et/ou externe, **en ce qu'**on joint ensuite les substrats, l'adhésif collant venant se disposer entre eux, et enfin **en ce qu'**on laisse prendre la structure en la laissant au repos pendant un laps de temps de 30 secondes à 30 minutes.

9. Procédé selon la revendication 8, **caractérisé en ce que** l'adhésif solide, via un frottement de glissement sur un papier, génère sur ce dernier une épaisseur de film de 2 à 200 µm, de préférence de 10 à 100 µm, à une vitesse de 1 à 500 cm/seconde, de préférence de 2 à 100 cm/seconde, et sous une pression de 1,0 kPa à 10 MPa, de manière préférée de 5,0 kPa à 5,0 MPa, et de préférence de 10 kPa à 1 MPa, à 20 °C.

10. Procédé pour le collage de substrats selon la revendication 8 ou 9, en utilisant l'adhésif selon au moins une des revendications 1 à 6, **caractérisé en ce que** de préférence au moins un substrat représente du papier, du carton, du bois ou du textile.

11. Procédé pour la suppression de collages que l'on a réalisés conformément au procédé selon la revendication 10, **caractérisé en ce qu'**on réduit le collage à néant par réchauffement ou par l'action de l'eau.
